# EUROPEAN PATENT APPLICATION

(11) **EP 1 632 856 A1**
(43) Date of publication of application: **08.03.2006**
(21) Application number: 03736088.0
(22) Date of filing: 09.06.2003
(51) Int. Cl.: G06F 12/00

(54) **STORAGE MANAGEMENT UNIT, STORAGE UNIT, FILE PROCESSING SYSTEM, FILE MANAGEMENT SYSTEM, AND THEIR METHODS AND PROGRAMS**

(71) Applicant: FUJITSU LIMITED, Kawasaki-shi, Kanagawa 211-8588 (JP)
(72) Inventor: ITOH, Tsutomu, c/o FUJITSU LIMITED, Kawasaki-shi, Kanagawa 211-8588 (JP)
(74) Representative: Körfer, Thomas
(86) International application number: PCT/JP2003/007260
(87) International publication number: WO 2004/109517

(57) **Abstract**

A storage management apparatus comprises a storage pool management section that selects storages having desired characteristics from a storage pool including storages for which different characteristics are required and a virtual storage construction section that associates the selected storages with one virtual storage.

## Description

### Technical Field

The present invention relates to a storage management apparatus, a storage apparatus, a file processing system, a file management system, and methods and programs thereof that can be applied to a system capable of using storages for which different characteristics are requested.

### Background Art

In order to perform file management using various types of storages having different storage attributes such as high reliability, high-speed access or low-speed access, various techniques that selectively use a plurality of storages have been proposed (refer, for example, to Patent documents 1 to 3). For example, according to these techniques, data of high importance is stored in a highly reliable storage, and data that needs to be read at a high-speed is stored in a storage capable of realizing a high-speed access.

### Patent Document 1

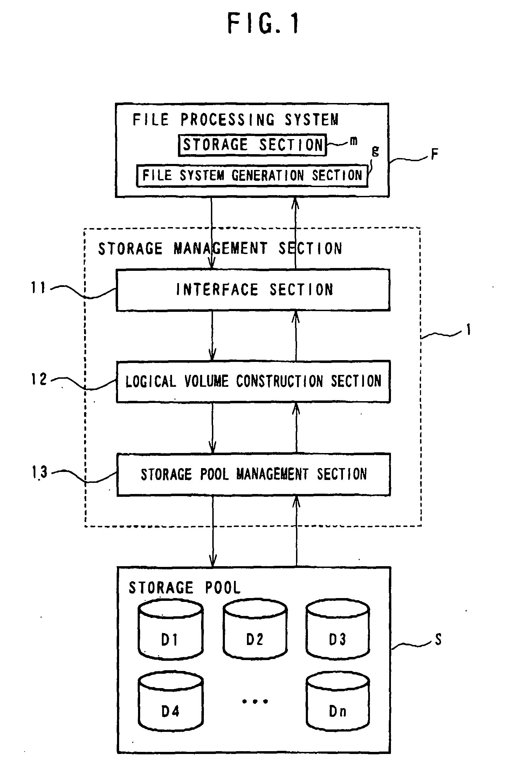

Jpn. Pat. Appln. Laid-Open Publication No. 6-35770 (pages 2 to 3, FIG. 1)

### Patent Document 2

Jpn. Pat. Appln. Laid-Open Publication No. 7-121416 (pages 2 to 3, FIG. 1) Patent Document 3

Jpn. Pat. Appln. Laid-Open Publication No. 2000-20247 (pages 2 to 5, FIG. 1)

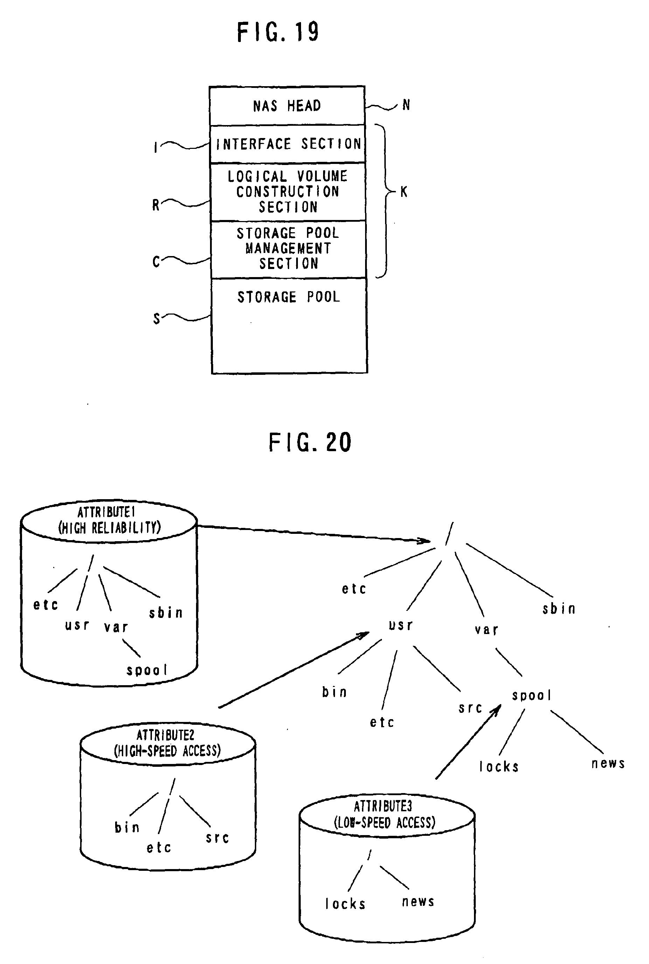

Such prior arts prepare file systems for respective storages having different storage attributes and combine the file systems to thereby perform file management (refer to FIG. 20). Therefore, in the prior arts, a user needs to be aware of correspondence between the storages having different storage attributes and file systems when he or she uses a desired file system. Further, the correspondence between the storages having different storage attributes and file systems is one to one. Therefore, when locating a given file in a storage having a given storage attribute, the user must locate the file in the location (file system) corresponding to a storage having the storage attribute.

In the case of locating a given file in a storage having a storage attribute (attribute 2) of "high-speed access", the user must locate the file in a directory under /usr/; and in the case of locating a given file in a storage having a storage attribute (attribute 3) of "low-speed access", the user must locate the file in a directory under /var/spool/. As described above, the file storage location differs depending on the storage attribute, so that the user must selectively use the storage locations every time he or she locates a file.

Further, a plurality of file systems corresponding to different storages exist in a file management system, making a file system management work of a system administrator complicated.

The present invention has been made to solve the above problem and an object thereof is to provide a storage management apparatus, a storage apparatus, a file processing system, a file management system, and methods and programs thereof capable of contributing to an increase in usability and reduction in the burden on the system administrator.

### Disclosure of the Invention

According to the present invention, there is provided a storage management apparatus that comprises: a storage pool management section that selects storages having desired characteristics from a storage pool including storages for which different characteristics are required; and a virtual storage construction section that associates the selected storages with one virtual storage. With the above configuration, it is possible to associate a plurality of storages having different storage attributes with one virtual storage, allowing a file processing system that performs processing of files to be generally stored in a storage pool to handle the plurality of storages as one virtual storage. That is, it is possible for a system administrator to easily manage all files stored in a plurality of storages by managing one file system that has been generated for one virtual storage, which contributes to a reduction in the burden on the system administrator. Therefore, it is possible to select a plurality of storages having desired characteristics from the storage pool including a plurality of storages for which different characteristics are required and to associate the selected storages to one virtual storage.

In the storage management apparatus according to the present invention, it is preferable that the virtual storage construction section associate ID of the selected storage with ID of the one virtual storage. When a plurality of storages are selected, IDs of the selected storages can be associated with ID of one virtual storage. The storage management apparatus further comprises an interface section that receives a request from a file processing system that performs processing of files to be stored in the selected storage, and the selection of a storage having desired characteristics can be performed in response to a request from the file processing system. Further, it is possible that the characteristics be related at least to a storage characteristic of a storage.

Further, according to the present invention, there is provided a storage management apparatus comprising the above storage management apparatus; and the storage pool including storages for which different characteristics are required. The storage pool may include a plurality of storages having different characteristics.

Further, according to the present invention, there is provided a file processing system that performs processing of files to be stored in storages for which different characteristics are required, comprising: a file system generation section that generates a file system for one virtual storage with which the storage is associated and associates respective directories and files in the generated file system with the storage having desired characteristics; and a storage section that stores information related to a correspondence between the directories and storages and correspondence between the files and storages. With the above configuration, it is possible for a system administrator to easily manage all files stored in a plurality of storages by managing one file system that has been generated for one virtual storage, which contributes to a reduction in the burden on the system administrator. Further, a user need not be conscious of the location of the file system corresponding to each characteristics. Further, it is possible to arbitrarily locate directories and files corresponding to a storage having desired characteristics in the directory of the file system that the user is conscious of.

Further, according to the present invention, there is provided another file processing system that performs processing of files to be stored in storages for which different characteristics are required, comprising: a file system generation section that generates file systems for respective virtual storages that have been associated with the storages on a per characteristics basis; a file system synthesis section that allows the generated file systems to overlap each other to synthesize one file system from the plurality of file systems and associates respective directories and files in the synthesized file system with the storages having desired characteristics; and a storage section that stores information related to a correspondence between the directories and storages and correspondence between the files and storages. With the above configuration, in addition to the advantage obtained from the above file processing system, it is possible to obtain another advantage that when one file system is generated by the overlap of file systems generated on a per characteristics basis, it is possible to easily return a storage having a given storage attribute simply by releasing the overlap.

In the above file processing system, it is preferable that a correspondence between the directories and storages and correspondence between files and storages be previously set. Further, it is preferable that a correspondence between the files and storages be set based on a file extension.

Further, according to the present invention, there is provided a file management system that comprises: a storage pool management section that selects a storage having desired characteristics from a storage pool including storages for which different characteristics are required; a virtual storage construction section that associates the selected storage with one virtual storage; a file system generation section that generates a file system for one virtual storage with which the storage is associated and associates respective directories and files in the generated file system with the storage having desired characteristics; and a storage section that stores information related to a correspondence between the directories and storages and correspondence between the files and storages.

Further, according to the present invention, there is provided another file management system that comprises: a storage pool management section that selects a storage having desired characteristics from a storage pool including storages for which different characteristics are required; a virtual storage construction section that associates the selected storage with a virtual storage on a per characteristics basis; a file system generation section that generates file systems for respective virtual storages that have been associated with the storages on a per characteristics basis; a file system synthesis section that allows the generated file systems to overlap each other to synthesize one file system from the plurality of file systems and associates respective directories and files in the synthesized file system with the storages having desired characteristics; and a storage section that stores information related to a correspondence between the directories and storages and correspondence between the files and storages.

Further, according to the present invention, there is provided a storage management method comprising: a storage pool management step that selects a storage having desired characteristics from a storage pool including storages for which different characteristics are required; and a virtual storage construction step that associates the selected storage with one virtual storage. In the above storage management method, it is preferable that the virtual storage construction step associate ID of the selected storage with ID of the one virtual storage. Further, it is preferable that the characteristics be related at least to a storage characteristic of a storage.

Further, according to the present invention, there is provided a file processing method that performs processing of files to be stored in storages for which different characteristics are required, characterized by comprising: a file system generation step that generates a file system for one virtual storage with which the storage is associated and associates respective directories and files in the generated file system with the storage having desired characteristics; and a storage step that stores information related to a correspondence between the directories and storages and correspondence between the files and storages.

Further, according to the present invention, there is provided another file processing method that performs processing of files to be stored in storages for which different characteristics are required, characterized by comprising: a file system generation step that generates file systems for respective virtual storages that have been associated with the storages on a per characteristics basis; a file system synthesis step that allows the generated file systems to overlap each other to synthesize one file system from the plurality of file systems and associates respective directories and files in the synthesized file system with the storages having desired characteristics; and a storage step that stores information related to a correspondence between the directories and storages and correspondence between the files and storages. In the above file processing method, it is preferable that a correspondence between the directories and storages and correspondence between files and storages be previously set. Further, it is preferable that a correspondence between the files and storages be set based on a file extension.

Further, according to the present invention, there is provided a storage management program allowing a computer to execute: a storage pool management step that selects a storage having desired characteristics from a storage pool including storages for which different characteristics are required; and a virtual storage construction step that associates the selected storage with one virtual storage. In the above storage management program, it is preferable that the virtual storage construction step associate ID of the selected storage with ID of the one virtual storage. Further, it is preferable that the characteristics are related at least to a storage characteristic of a storage.

Further, according to the present invention, there is provided a file processing program allowing a computer to execute a file processing method that performs processing of files to be stored in storages for which different characteristics are required, the program allowing a computer to execute: a file system generation step that generates a file system for one virtual storage with which the storages are associated and associates respective directories and files in the generated file system with the storages having desired characteristics; and a storage step that stores information related to a correspondence between the directories and storages and correspondence between the files and storages.

Further, according to the present invention, there is provided another file processing program allowing a computer to execute a file processing method that performs processing of files to be stored in storages for which different characteristics are required, comprising: a file system generation step that generates file systems for respective virtual storages that have been associated with the storages on a characteristic basis; a file system synthesis step that allows the generated file systems to overlap each other to synthesize one file system from the plurality of file systems and associates respective directories and files in the synthesized file system with the storages having desired characteristics; and a storage step that stores information related to a correspondence between the directories and storages and correspondence between the files and storages. In the above file processing program, it is preferable that a correspondence between the directories and storages and correspondence between files and storages be previously set. Further, it is preferable that a correspondence between the files and storages be set based on a file extension.

### Brief Description of the Drawings

FIG. 1 is a block diagram for explaining a functional configuration of a first embodiment of the present invention;
FIG. 2 is a view showing the flow of information in a storage management section;
FIG. 3 is a flowchart for explaining the flow of the logical volume construction process performed by the storage management section;
FIG. 4 is a view for explaining logical volume management information;
FIG. 5 Is a view for explaining storage pool management information;
FIG. 6 is a flowchart for explaining the process flow of an external interface function of the storage management section;
FIG. 7 is a flowchart for explaining addition processing of a storage having a required storage attribute to a logical volume performed in the storage management section;
FIG. 8 is a flowchart for explaining delete processing of a storage having an unnecessary storage attribute from a logical volume performed in the storage management section;
FIG. 9 is a view for explaining addition processing of an extended attribute in a file system;
FIG. 10 is a view for explaining file system management information;
FIG. 11 is a view for explaining operation of a file management system according to the first embodiment;
FIG. 12 is a view for explaining operation of the file management system according to the first embodiment;
FIG. 13 is a block diagram for explaining a functional configuration of a second embodiment of the present invention;
FIG. 14 is a view for explaining operation of the file management system according to the second embodiment;
FIG. 15 is a view for explaining overlap of the file systems in the second embodiment;
FIG. 16 is a view for explaining overlap of the file systems in the second embodiment;
FIG. 17 is a view for explaining overlap of the file systems in the second embodiment;
FIG. 18 is a view for explaining overlap of the file systems in the second embodiment;
FIG. 19 is a view showing an example of a file management system that can be provided by the present invention; and
FIG. 20 is a view for explaining a conventional file management.

### Best Mode for Carrying Out the Invention

Embodiments of the present invention will be described below in detail with reference to the accompanying drawings.

### (First Embodiment)

FIG. 1 is a functional block diagram for explaining a first embodiment of the present invention.

As shown in FIG. 1, a file management system according to the first embodiment includes a storage management section (storage management apparatus) 1 that can communicate with a storage pool S and a file processing system F having a configuration management application and the like. The storage poll S and storage management section 1 constitute a storage apparatus. The storage management section 1 and file processing system F have a not-shown CPU, respectively.

The storage management section or file processing system used here indicates the overall system that handles files and therefore includes a disk apparatus or appliance server that provides a file service.

The storage pool S has a plurality of storages D1 to Dn. In the first embodiment, storage attributes represented as storage characteristics (high reliability, high-speed access, low-speed access) of respective storages (D1 to Dn) are different from each other. As a matter of course, the configuration of the storage pool S is not limited to the above and the storage pool S may include a plurality of storages having the same attributes (for example, storages D1 and D2 are of high-speed access and storages D3 to Dn are of high reliability (duplicated storages)). As described above, the storage pool S has a plurality of storages having different characteristics. That is, the storage pool S has a plurality of storages for which different characteristics (to be described later) are requested.

A physical storage area (HDD, FROM, flexible disk, DVD disk, magneto-optical disk, IC card, etc.) or a virtual storage area provided in the above physical storage area can be used as the plurality of storages D1 to Dn.

The storage management section 1 includes an interface section 11, a logical volume construction section (virtual storage construction section) 12, and a storage pool management section 13. The storage management section 1 has function of managing the storage pool, selecting a storage, constructing a logical volume (virtual storage), serving as an external interface, reconstructing a logical volume, returning the volume, and the like.

These functions of the storage management section 1 will be described In detail below.

### (1) Management of storage pool

The storage pool management section 13 maintains and manages the plurality of storages D1 to Dn provided in the storage pool S.

### (2) Selection of storage

The storage pool management section 13 selects a storage having a desired attribute from the plurality of storages D1 to Dn provided in the storage pools (storage pool management step).

### (3) Construction of logical volume

A logical volume is constructed based on the storage selected from the storage pool.

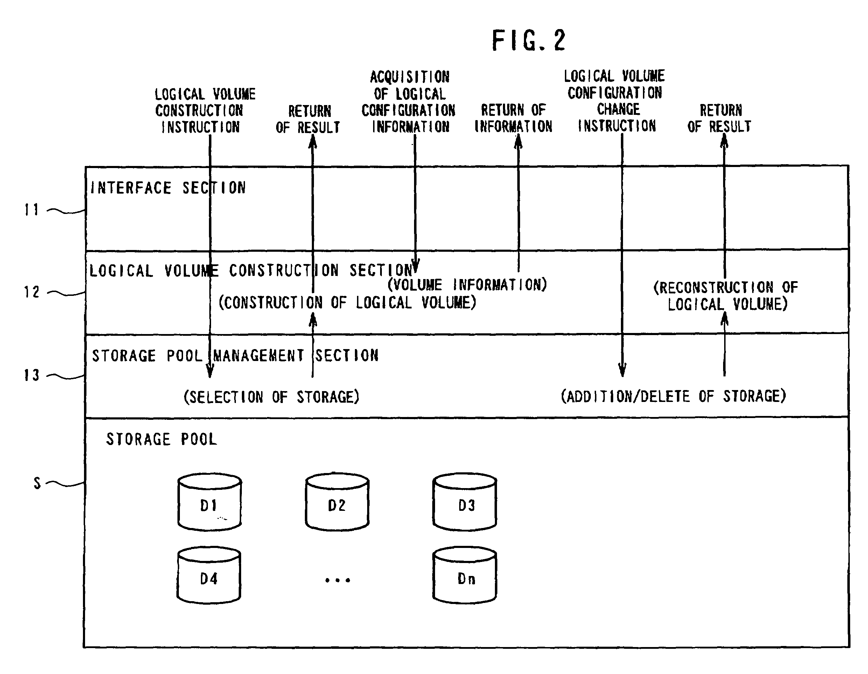

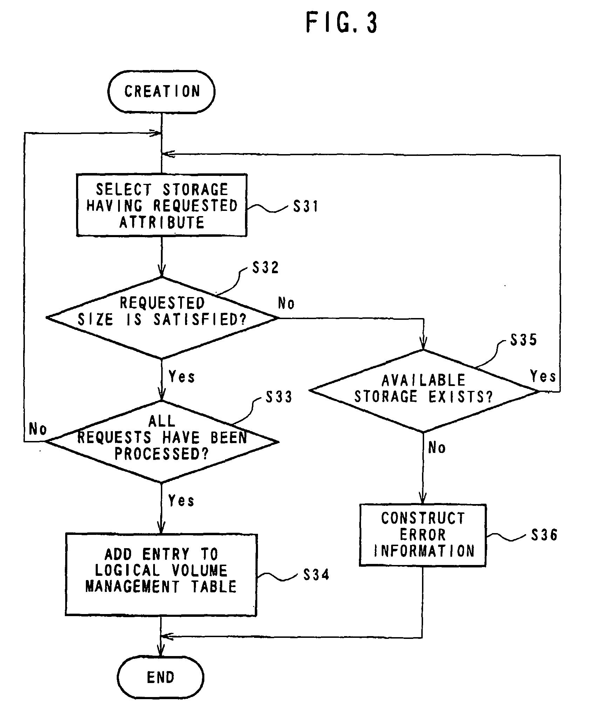

The flow of the logical volume construction process will be described in detail with reference to FIGS. 2 and 3. FIG. 2 is a view showing the flow of information in the storage management section 1 and FIG. 3 is a flowchart for explaining the flow of the logical volume construction process performed by the storage management section 1.

Firstly the storage pool management section 13 receives a logical volume construction instruction from the file processing system F and selects a storage having a requested storage attribute (high-speed access, low-speed access, high reliability, or the like) based on a request parameter included in the instruction (S31). Examples of the content of the request parameter include "storage attribute" and "size". Further, examples of the type of the parameter include "creation" and "information acquisition".

The "storage attribute" and "size" correspond to the characteristics of the storage (at least relate to the storage characteristic of the storage). Accordingly, the selection of a storage based on a request parameter means that a storage having a desired characteristics can be selected. As a matter of course, the request parameter may include other specifications related to the storage in addition to "storage attribute" and "size".

In the case where the storage that has been selected in the above step (S31) has required free space (Yes in S32), the storage pool management section 13 checks whether all requests (request related to "storage attribute" and "size") received from the file processing system F have been processed or not. If there is any unprocessed request, the storage pool management section 13 returns to step S31 and repeats the same processing (No in S33).

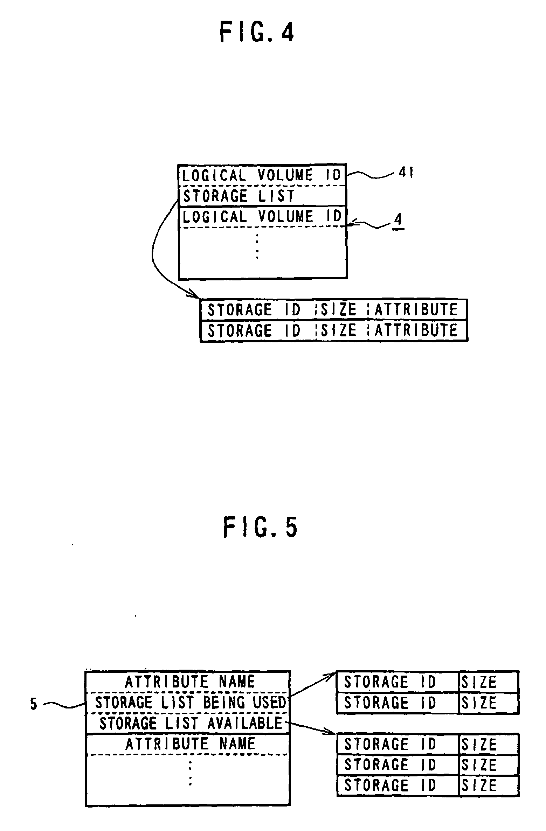

On the other hand, when all requests have been processed (Yes in S33), the logical volume construction section 12 adds an entry to a logical volume management table 4 in which logical volume management information shown in FIG. 4 has been stored (S34). The logical volume management information shown in FIG. 4 is information indicating a correspondence between ID (volume ID) of a logical volume serving as a virtual storage and ID of a desired storage that has been selected in the abovementioned step. As shown in FIG. 4, one or more storages can be associated (virtual storage construction step) with one logical volume.

FIG. 4 shows an example in which two storage IDs are associated with a logical volume ID 41. A plurality of storages having different storage attributes or plurality of storages having the same storage attribute can be associated with one logical volume ID. Alternatively, however, a single storage can be associated with one logical volume.

In the case where the storage that has been selected in the above step (S31) does not have required free space (No in S32), the storage pool management section 13 checks the availability of storage with reference to a storage pool management table 5 in which storage pool management information shown in FIG. 5 is stored (S35). The storage pool management information in FIG. 5 is information indicating availability of the storage having a given storage attribute. When the storage having the required storage attribute is available (Yes in S35), the storage pool management section 13 returns to the above step (S31) and repeats the same processing. When not available (No in S35), the storage pool management section 13 constructs error information (S36).

As described above, a storage management method comprising the storage pool management step that selects a storage having desired characteristics from the storage pool including a plurality of storages for which different characteristics are requested and virtual storage construction step that associates the selected storage with one virtual storage is realized.

### (4) External interface

The storage management section 1 serves as an external interface to exchange information related to a storage or logical volume configuration with the file processing system F including a configuration management application and the like.

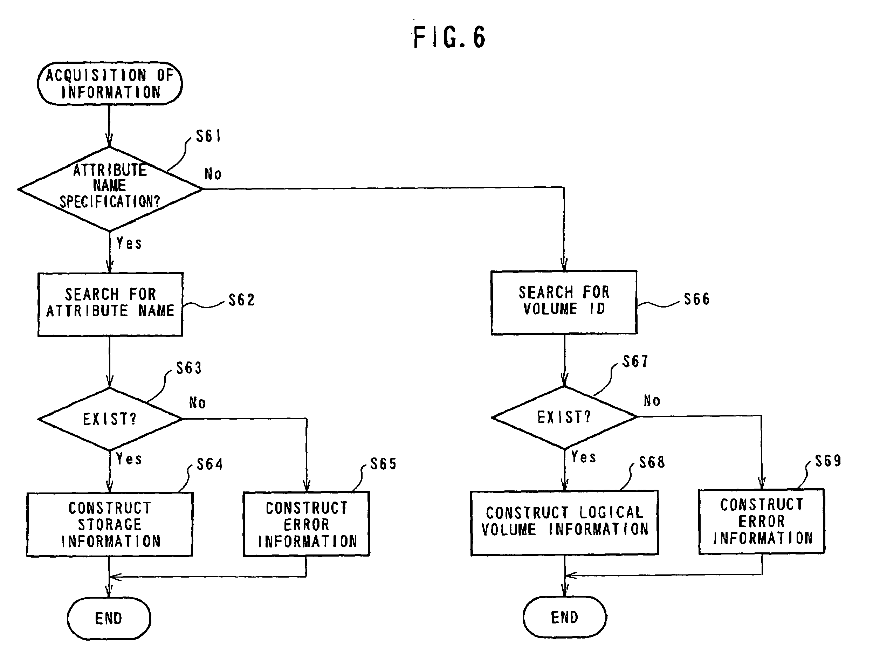

The process flow of the external interface will be described in detail with reference to FIGS. 2 and 6. FIG. 6 is a flowchart for explaining the process flow of the external interface of the storage management section 1.

Upon receiving a request from the file processing system F, the interface section 11 checks whether the information type of the request parameter is attribute name specification (request for acquiring information related to storage) or not (S61). It is assumed that the information type of the request parameter includes two types: attribute name specification; and volume ID specification (request for acquiring logical volume information). Examples of the request parameter Include parameter type, information type, requested information name, and the like.

In the case where the information type is attribute name specification (Yes in S61), the storage pool management section 13 searches for an entry having the specified attribute name from the storage pool management information shown in FIG. 5 (S62).

When an entry having the specified attribute name exists (Yes in S63), the storage pool management section 13 constructs storage information (S64); whereas when an entry having the specified attribute name does not exist (No in S63), the storage pool management section 13 constructs error information (S65).

In the case where the information type is volume ID specification (No in S61), the logical volume construction section 12 searches for an entry having the specified volume ID from the logical volume management information shown in FIG. 4 (S66).

When an entry having the specified volume ID exists (Yes in S67), the logical volume construction section 12 constructs logical volume information (S68); whereas when an entry having the specified volume ID does not exist, the logical volume construction section 12 constructs error information (S69).

### (5) Reconstruction of logical volume

The storage management section 1 adds a storage having a required storage attribute to the logical volume or deletes a storage having an unnecessary storage attribute from the logical volume.

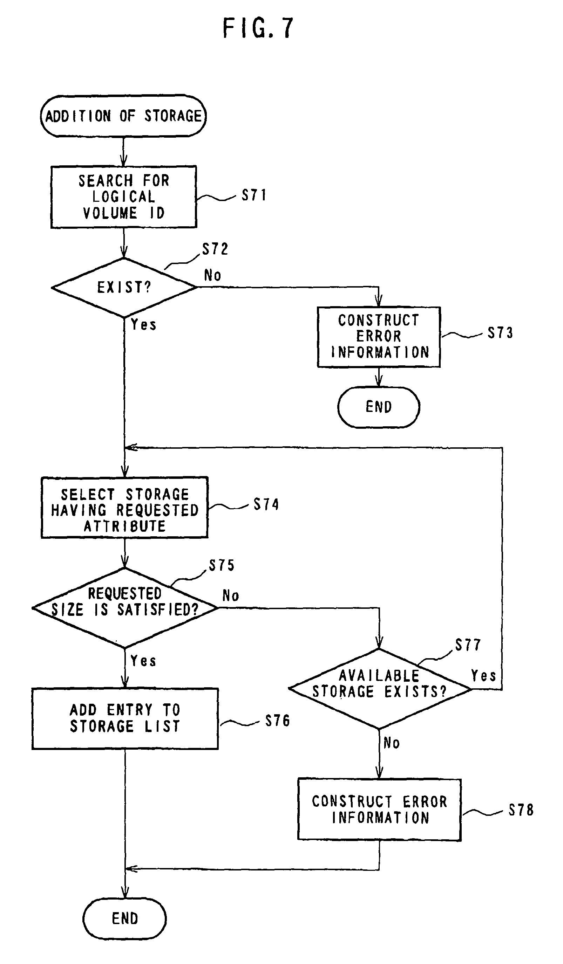

Firstly the flow of the addition processing of a storage having a required storage attribute to the logical volume will be described with reference to FIGS. 2 and 7. FIG. 7 is a flowchart for explaining the addition processing of a storage having a required storage attribute to the logical volume performed in the storage management section 1.

The logical volume construction section 12 searches for the logical volume ID specified by the request parameter sent from the file processing system F from the logical volume management information shown in FIG. 4 (S71). Examples of the request parameter include parameter type, logical volume ID, storage attribute, storage size (storage capacity),

When the specified logical volume ID does not exist (No in S72), the logical volume construction section 12 constructs error information (S73). When the specified logical volume ID exists (Yes in S72), the storage pool management section 13 selects a storage having a requested storage attribute from the storage pool management information shown in FIG. 5 (S74).

When the storage selected in the above step (S74) satisfies the size requirement requested in a form of a request parameter (Yes in S75), the storage pool management section 13 adds an entry to the storage list of the logical volume management information shown in FIG. 4 (S76).

On the other hand, when the storage selected in the above step (S74) does not satisfy the size requirement requested in a form of a request parameter (No in S75), the storage pool management section 13 checks the availability of the storage. When the storage is available (Yes in S77), the storage pool management section 13 performs processing again starting from the above step (S74). When not available (No in S77), the storage pool management section 13 constructs error information (S78).

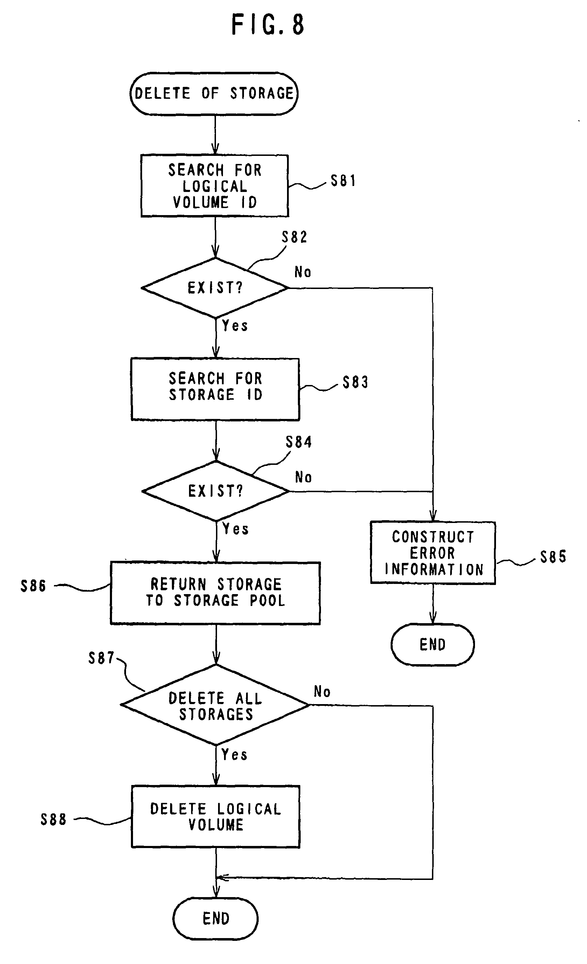

Next, the flow of the delete processing of a storage having an unnecessary storage attribute from the logical volume will be described with reference to FIGS. 2 and 8. FIG. 8 is a flowchart for explaining the delete processing of a storage having an unnecessary storage attribute from the logical volume performed in the storage management section 1.

Firstly the logical volume construction section 12 searches for the logical volume ID specified by the request parameter sent from the file processing system F from the logical volume management information shown in FIG. 4 (S81).

When the specified logical volume ID exists (Yes in S82), the logical volume construction section 12 searches for the storage ID specified by the request parameter from the storage list related to the logical volume ID that has been searched for (S83). Examples of the request parameter include parameter type, volume ID, and storage ID.

When the logical volume ID specified by the request parameter does not exist in the logical volume management information (No in S82) or when the storage ID specified by the request parameter does not exist in the logical volume management information (No in S84), the logical volume construction section 12 constructs error information (S85).

On the other hand, the storage ID specified by the requested parameter exists in the logical volume management information (Yes in S84), the storage pool management section 13 returns a storage having the specified storage ID to the storage pool S (S86).

The storage pool management section 13 then determines whether all storages have been returned or not (S87). When all storages have been returned (Yes in S87), the logical volume construction section 12 deletes entries having the corresponding logical volume ID from the logical volume management information (S88). When all storages have not been returned (No in S87), this flow is ended.

### (6) Return of volume

The storage management section 1 returns an unnecessary logical volume (storage group) to the storage pools.

As described above, the storage management section 1 has the functions such as those described in (1) to (6).

The storage pool management information and logical volume management information are stored in a not-shown storage section provided in the storage management section 1.

The file system F has a file system generation section g that generates one file system for each logical volume constructed in the storage management section 1 having the above configuration and a storage section m.

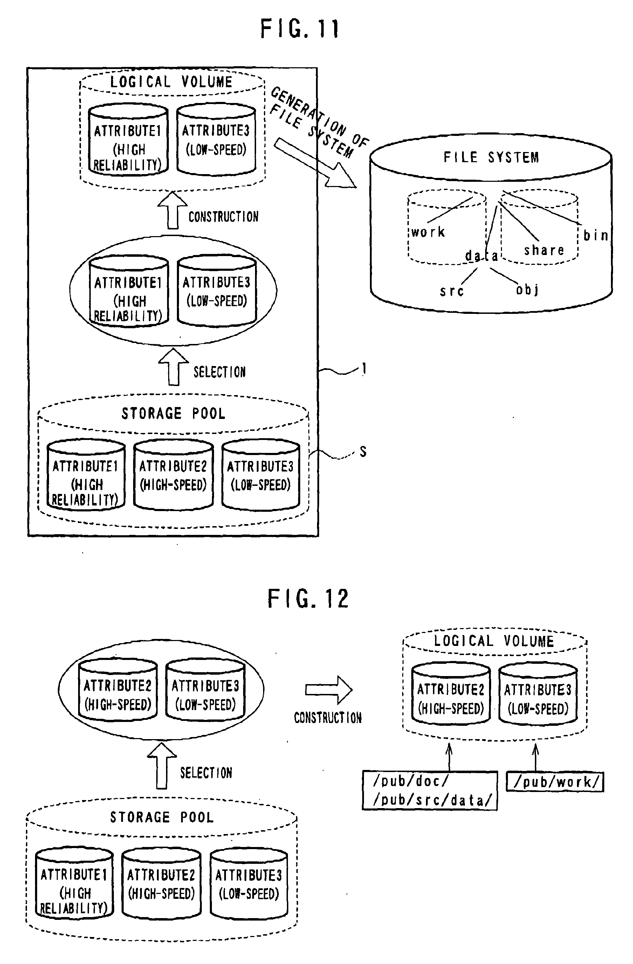

Operation of the file management system having the above configuration will be described below with reference to FIG. 11.

Upon receiving a request from the file processing system F, the storage management section 1 selects a plurality of storages (in this case, selects storages of attribute 1 (high reliability) and attribute 3 (low-speed)) each having a required storage attribute (desired characteristics) from the storage pool S.

The storage management section 1 then associates the selected storage group with a logical volume ID using the storage list (FIG. 4), as shown in the logical volume management information of FIG. 4. That is, it is possible to associate a plurality of storages having different storage attributes from each other with one logical volume ID, and thereby the file processing system F can handle the plurality of storages as one virtual storage.

The file system generation section g generates a file system for each logical volume (virtual storage) of the logical volume ID with which the selected storage group has been associated.

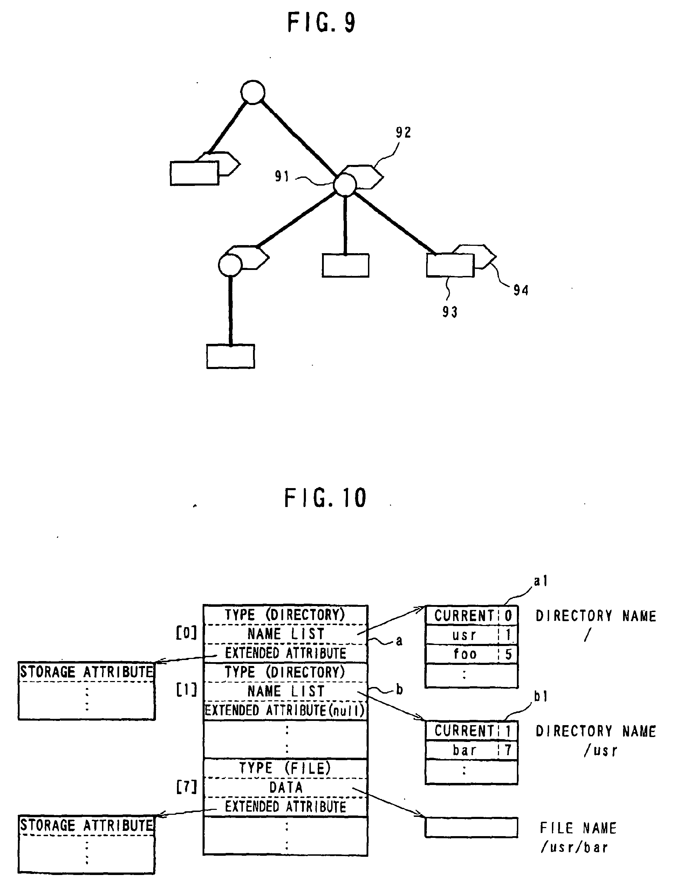

An extended attribute (storage attribute) is added to respective directories in the file system generated here, as shown in FIG. 9 (file system generation step). A correspondence between the attribute to be added and directory is stored in the storage section m as file system management information (FIG. 10) (storage step). The attribute can be added not only to directories but also to files, as shown in FIGS. 9 and 10. That is, the file system management information serves as information related to a correspondence between directories and a plurality of storages and a correspondence between files and the storages.

The file system management information used here may be arbitrarily set through a system administrator's or user's input operation on a case-by-case basis or may be set previously.

As described above, a file processing method that performs processing of files to be stored in a plurality of storages having different storages from each other, which comprises a file system generation step that generates a file system for one virtual storage with which a plurality of storages are associated and associates respective directories and files in the generated file system with the storages having desired characteristics and a storage step that stores information related to a correspondence between the directories and storages and correspondence between the files and storages, can be realized.

Next, details of the file system management information will be described. As shown in FIG, 10, a name list a related to directory / and its extended attribute are stored in ID [0] of the file system management information.

The name list a stores name list information a1. The name list information a1 indicates that directories named /usr, /foo, and the like exist under the directory /. In the name list information a1, each numeral appended to the right side of the directory name represents ID of the management information related to corresponding directory.

For example, the management information of the directory /usr is stored in ID [1] and the name list information b1 of the directory /usr stored in the name list b indicates that a file named /usr/bar exists under the directory /usr.

The management information related the file named /usr/bar is stored in ID [7].

The extended attribute (storage attribute) is associated with each ID of the file system management information. That is, as shown in FIG. 9, a file located in a directory 91 is located in a storage having an extended attribute 92 set in association with the directory 91. If an extended attribute 94 is associated with a given file 93 itself, the file 93 is stored in a storage having the extended attribute 94.

To be more specific, as shown in FIG. 12, it is assumed that "attribute 2 (high-speed access)" is added to directory named /pub/doc/ and directory named /pub/src/data/ and "attribute 3 (low-speed access)" is added to directory named /pub/work/. When a user creates a file under the directory named /pub/doc/ under this setting, the file is automatically above stored in a storage having "attribute 2 (high-speed access)". Further, when the user creates a file under the directory named /pub/work/, the file is automatically stored in a storage having "attribute 3 (low-speed access)".

In the case of a system like Windows, in which each file has an extension, the file extension may be associated with the extended attribute in the file system management information. This allows, for example, "*. doc" to be associated with a storage of high reliability and "*. exe" to be associated with a storage of high-speed access.

When the user adds an arbitrary extended attribute to an existing file, the file can be relocated in a storage having the same extended attribute (storage attribute).

With the configuration described above, it is possible to automatically locate a file in an appropriate storage without user's consciousness by a single setting of the attribute for the directory or file.

As described above, according to the first embodiment, it is possible to arbitrarily locate directories and files having different attributes within a single path (user's home directory, etc.) that the user is conscious of; whereas the user need not be conscious of the location of the file system corresponding to each storage attribute such as high reliability, high-speed access, or low-speed access.

### (Second Embodiment)

A second embodiment of the present invention will next be described below. The second embodiment is a modification of the first embodiment, so that the same reference numerals as the first embodiment are given to the components which are common to the first embodiment and the overlapped description is omitted.

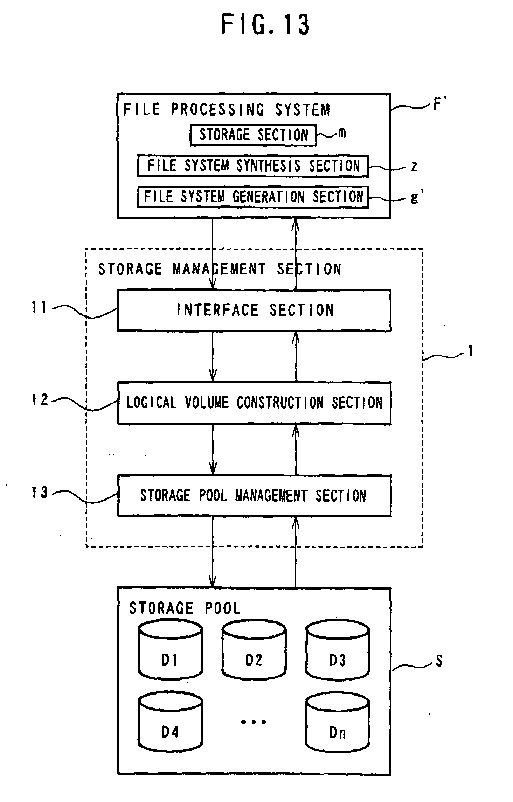

FIG. 13 is a block diagram for explaining a functional configuration of the second embodiment of the present invention.

As shown in FIG. 13, a file management system according to the second embodiment includes a storage management section (storage management apparatus) 1 that can communicate with a storage pool S and a file processing system F' having a configuration management application and the like. The storage management section 1 and file processing system F' have a not-shown CPU, respectively.

The storage management section 1 includes an interface section 11, a logical volume construction section 12, and a storage pool management section 13. The function of the storage pool management section 13 is the same as that of the storage pool management section of the first embodiment.

The file processing system F' includes a storage section m, a file system synthesis section z, and a file system generation section g'.

One logical volume ID is associated with a storage group constituted by a plurality of storages having different storage attributes from each other in the first embodiment; whereas one logical volume ID is associated with one attribute (on a per characteristics basis) in the second embodiment.

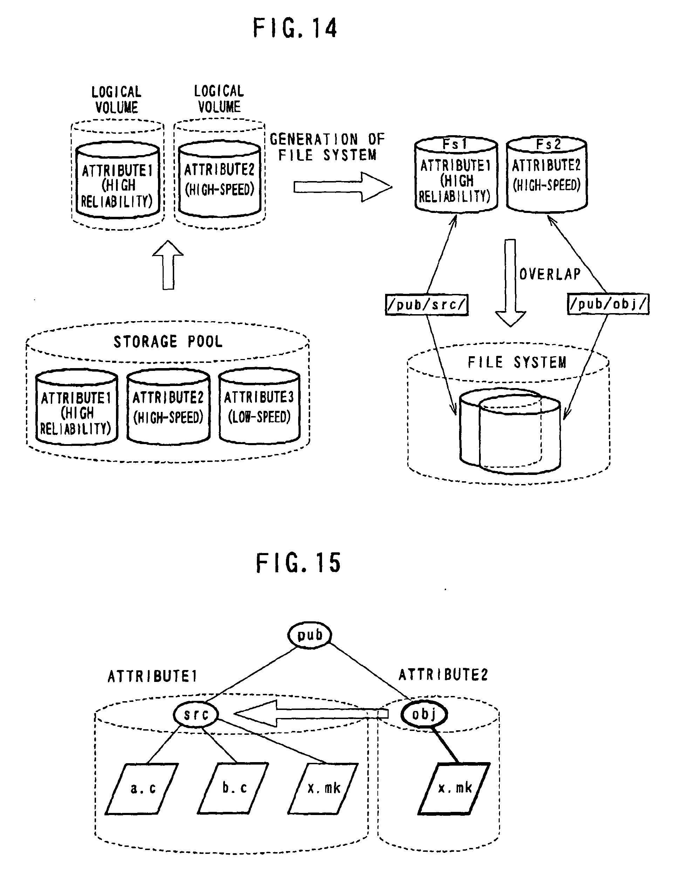

Operation of the file management system according to the second embodiment will be described below with reference to FIG. 14.

Upon receiving a request from the file processing system F', the storage management section 1 selects a plurality of storages (in this case, selects storages of attribute 1 (high reliability) and attribute 2 (high-speed)) each having a desired storage attribute from the storage pool S.

The logical volume construction section 12 then associates a logical volume ID with each selected storage. At this time, the correspondence between the logical volume ID and storage ID is one to one.

The file system generation section g' generates file systems in a separated manner on the logical volumes corresponding to the respective storages of the selected storage group (file system generation step). In this case, a file system Fs1 is generated for the storage of attribute 1, and a file system Fs2 is generated for the storage of attribute 2. The generation method of these file systems is the same as that used in the first embodiment. However, at this time point, the extended attribute that has been added to the directory in one system is only the storage attribute of the storage including the generated file system.

The file system synthesis section z allows the file system Fs1 and file system Fs2 to overlap each other (mounts a file system on another file system) to thereby synthesize one file system from two file systems Fs1 and Fs2.

"Allows file systems to overlap each other" indicates, for example, that directory named /pub/obj is mounted on directory named /pub/src (refer to FIGS. 14 and 15). Here, it is assumed that files named a.c, b.c, and x.mk are located under the directory named /pub/src and a file named x.mk is located under the directory named /pub/obj.

The overlap of file systems allows the user to see not only the files a. c and b.c that have been associated with the storage of attribute 1 but also the file x. mk that has been associated with the storage of attribute 2 under the directory named /pub/obj.

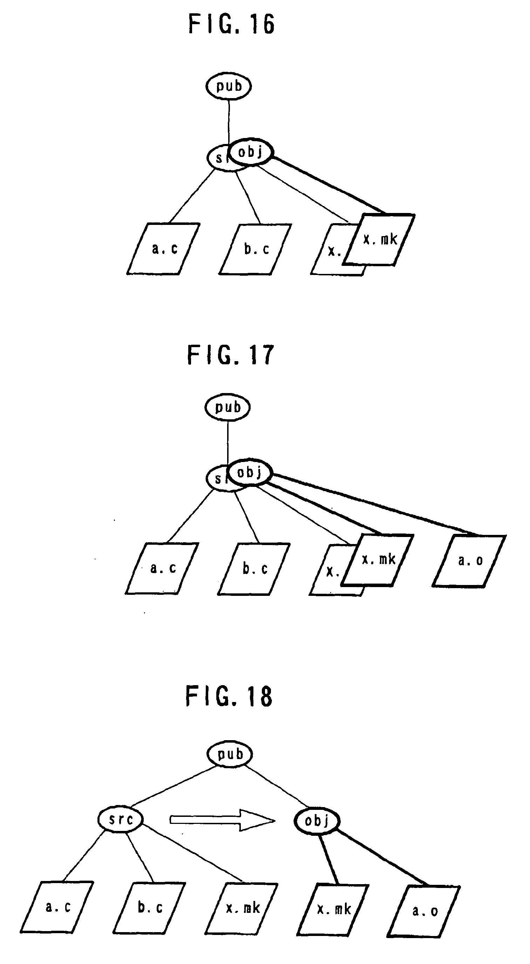

In this case, the user can also see files a.c, b.c, and x.mk under the directory named /pub/src. However, files /pub/obj/x.mk and /pub/src/x.mk are different files having different attributes (refer to FIG. 16).

Assuming that a file named /pub/obj/a.o is created under the above condition, the file a. o is located on the storage having attribute 2 (refer to FIG. 17).

Before the overlap, each file system is an individual file system having a unique storage attribute, so that it is possible to easily return a storage having a given storage attribute simply by releasing the overlap (refer to FIG. 18).

As described above, by overlapping file systems that have been generated in association with storages having different attributes (that is, each system has been associated with a single storage attribute), it is possible to construct one logical file system (one logical file system associated with a plurality of storages having different storage attributes) (file system synthesis step).

This allows the addition of the extended attributes (storage attributes) to respective directories In the system, as in the case of the first embodiment. A correspondence between the attribute to be added and directory is stored in the storage section m as file system management information (FIG. 10) (storage step). As is the case with the first embodiment, the extended attribute (storage attribute) can be added not only to directories but also to files.

In the second embodiment, the file system generation section g' generates file systems separately for each storage in the storage group. Alternatively, however, the file system generation section g' may generate a file system on a logical volume that has been associated with a plurality of storages having the same storage attribute (high reliability, etc.). This allows the return of a storage having a given storage attribute to be performed easily and realizes a flexible response to a request for storage size.

As described above, a file processing method that performs processing of files to be stored in a plurality of storages having different storages from each other, which comprises a file system generation step that generates file systems for respective virtual storages that have been associated with the storages on a per characteristics basis, a file system synthesis step that allows the generated file systems to overlap each other to synthesize one file system from the plurality of file systems and associates respective directories and files in the synthesized file system with the storages having desired characteristics, and a storage step that stores information related to a correspondence between the directories and storages and correspondence between the files and storages, can be realized.

According to the present invention, as shown in, for example, FIG. 19, it is possible to provided a file management system obtained by incorporating a NAS (Network Attached Storage) head N that can communicate with an external system (serving as the file processing system), a storage pool S, a storage pool management section C, a logical volume construction section R, and an interface section I in a single locker. In this case, the storage management section C, logical volume construction section R, and interface section I constitute a storage management section K.

Further, by providing a storage management apparatus (appliance) having the same configuration as that of the storage management section K, it is possible to easily introduce a file management system that can locate a file based on the storage attribute in an appropriate manner without modifying an existing system environment.

According to the above embodiments, it is possible for a system administrator to easily manage all files stored in a plurality of storages by managing one file system that has been generated for one virtual storage, which contributes to a reduction in the burden on the system administrator.

Further, information related to the storage attribute of the storage associated with the file system is managed by the storage management section, which eliminates the need for the system administrator that manages the file system to perform management of the attribute.

The storage management method in the above embodiments is realized by allowing the not-shown CPU that is provided in the storage management section to execute a storage management program, and the file processing method in the above embodiments is realized by allowing the not-shown CPU that is provided in the file processing system to execute a file processing program.

The storage management program and file processing program in the above embodiments can be stored not only in the storages in the storage pool, storage section in the file processing system, and not-shown storage section provided in the storage management section, but also in a computer-readable storage medium. The computer-readable medium mentioned here includes: a portable storage medium such as an HDD in an apparatus, an FROM, a CD-ROM, a flexible disk, a DVD disk, a magneto-optical disk, or an IC card; a database that holds computer program; another computer and database thereof; and a transmission medium on a network line.

### Industrial Applicability

As described above, according to the present invention, a storage management apparatus, a storage apparatus, a file processing system, a file management system, and methods and programs thereof capable of contributing to an increase in usability and reduction in the burden on the system administrator can be provided.

## Claims

1. A storage management apparatus **characterized by** comprising:
a storage pool management section that selects a storage having desired characteristics from a storage pool including storages for which different characteristics are required; and
a virtual storage construction section that associates the selected storage with one virtual storage.

2. The storage management apparatus according to claim 1, **characterized in that**
the virtual storage construction section associates ID of the selected storage with ID of the one virtual storage.

3. The storage management apparatus according to claim 1, **characterized by** comprising:
an interface section that receives a request from a file processing system that performs processing of files to be stored in the selected storage, **characterized in that**
the selection of a storage having desired characteristics is performed in response to a request from the file processing system.

4. **The storage management apparatus according to claim 1, characterized in that**
the characteristics are related at least to a storage characteristic of a storage.

5. A storage apparatus **characterized by** comprising the storage management apparatus as claimed in claim 1; and
the storage pool including storages for which different characteristics are required.

6. A file processing system that performs processing of files to be stored in storages for which different characteristics are required, **characterized by** comprising:
a file system generation section that generates a file system for one virtual storage with which the storage is associated and associates respective directories and files in the generated file system with the storage having desired characteristics; and
a storage section that stores information related to a correspondence between the directories and storages and correspondence between the files and storages.

7. A file processing system that performs processing of files to be stored in storages for which different characteristics are required, **characterized by** comprising:
a file system generation section that generates file systems for respective virtual storages that have been associated with the storages on a per characteristics basis;
a file system synthesis section that allows the generated file systems to overlap each other to synthesize one file system from the plurality of file systems and associates respective directories and files in the synthesized file system with the storages having desired characteristics; and
a storage section that stores information related to a correspondence between the directories and storages and correspondence between the files and storages.

8. The file processing system according to claim 6, **characterized in that**
a correspondence between the directories and storages and correspondence between files and storages are previously set.

9. The file processing system according to claim 6, **characterized in that**
a correspondence between the files and storages is set based on a file extension.

10. A file management system **characterized by** comprising:
a storage pool management section that selects a storage having desired characteristics from a storage pool including storages for which different characteristics are required;
a virtual storage construction section that associates the selected storage with one virtual storage;
a file system generation section that generates a file system for one virtual storage with which the storage is associated and associates respective directories and files in the generated file system with the storages having desired characteristics; and
a storage section that stores information related to a correspondence between the directories and storages and correspondence between the files and storages.

11. A file management system **characterized by** comprising:
a storage pool management section that selects a storage having desired characteristics from a storage pool including storages for which different characteristics are required;
a virtual storage construction section that associates the selected storage with a virtual storage on a per characteristics basis;
a file system generation section that generates file systems for respective virtual storages that have been associated with the storages on a per characteristics basis;
a file system synthesis section that allows the generated file systems to overlap each other to synthesize one file system from the plurality of file systems and associates respective directories and files in the synthesized file system with the storages having desired characteristics; and
a storage section that stores information related to a correspondence between the directories and storages and correspondence between the files and storages.

12. A storage management method **characterized by** comprising:
a storage pool management step that selects a storage having desired characteristics from a storage pool including storages for which different characteristics are required; and
a virtual storage construction step that associates the selected storage with one virtual storage.

13. The storage management method according to claim 12, **characterized in that**
the virtual storage construction step associates ID of the selected storage with ID of the one virtual storage.

14. The storage management method according to claim 12, **characterized in that**
the characteristics are related at least to a storage characteristic of a storage.

15. A file processing method that performs processing of files to be stored in storages for which different characteristics are required, **characterized by** comprising:
a file system generation step that generates a file system for one virtual storage with which the storage is associated and associates respective directories and files in the generated file system with the storage having desired characteristics; and
a storage step that stores information related to a correspondence between the directories and storages and correspondence between the files and storages.

16. A file processing method that performs processing of files to be stored in storages for which different characteristics are required, **characterized by** comprising:
a file system generation step that generates file systems for respective virtual storages that have been associated with the storages on a per characteristics basis;
a file system synthesis step that allows the generated file systems to overlap each other to synthesize one file system from the plurality of file systems and associates respective directories and files in the synthesized file system with the storages having desired characteristics; and
a storage step that stores information related to a correspondence between the directories and storages and correspondence between the files and storages.

17. The file processing method according to claim 15, **characterized in that**
a correspondence between the directories and storages and correspondence between files and storages are previously set.

18. The file processing method according to claim 15, **characterized in that**
a correspondence between the files and storages is set based on a file extension.

19. A storage management program allowing a computer to execute:
a storage pool management step that selects a storage having desired characteristics from a storage pool including storages for which different characteristics are required; and
a virtual storage construction step that associates the selected storage with one virtual storage.

20. The storage management program according to claim 19, **characterized in that**
the virtual storage construction step associates ID of the selected storage with ID of the one virtual storage.

21. The storage management program according to claim 19, **characterized in that**
the characteristics are related at least to a storage characteristic of a storage.

22. A file processing program allowing a computer to execute a file processing method that performs processing of files to be stored in storages for which different characteristics are required, the program allowing a computer to execute;
a file system generation step that generates a file system for one virtual storage with which the storage is associated and associates respective directories and files in the generated file system with the storage having desired characteristics; and
a storage step that stores information related to a correspondence between the directories and storages and correspondence between the files and storages.

23. A file processing program allowing a computer to execute a file processing method that performs processing of files to be stored in storages for which different characteristics are required, **characterized by** comprising:
a file system generation step that generates file systems for respective virtual storages that have been associated with the storages on a per characteristics basis;
a tile system synthesis step that allows the generated file systems to overlap each other to synthesize one file system from the plurality of file systems and associates respective directories and files in the synthesized file system with the storages having desired characteristics; and
a storage step that stores information related to a correspondence between the directories and storages and correspondence between the files and storages.

24. The file processing program according to claim 22, **characterized in that**
a correspondence between the directories and storages and correspondence between files and storages are previously set.

25. The file processing program according to claim 22, **characterized in that**
a correspondence between the files and storages is set based on a file extension.
